# EUROPEAN PATENT SPECIFICATION

(11) **EP 0 997 829 B1**
(45) Date of publication and mention of the grant of the patent: **06.03.2002**
(21) Application number: 99203485.0
(22) Date of filing: 22.10.1999
(51) Int. Cl.: G06F 17/30

(54) **"Method and device for simplifying the production of multimedia".**
Verfahren und Gerät um die Herstellung von Multimedia zu vereinfachen
Procédé et dispositif pour simplifier la production de multimédia

(30) Priority: 28.10.1998 BE 9800779
(43) Date of publication of application: 03.05.2000
(73) Proprietor: Vartec, Naamloze vennootschap, 9000 Gent (BE)
(72) Inventor: Vandamme, Mike Ferdi Hans, 9000 Gent (BE)
(74) Representative: Donné, Eddy

(56) References cited:
- WO-A-94/28480
- WO-A-97/46957

## Description

The present invention concerns a method for simplifying the production of multimedia, during the production of which, in a first stage, a scenario is developed whereby the content of the multimedia production is determined in a descriptive manner, whereby, in a second stage, the components of the multimedia are produced, after which, in a third stage, the produced components are integrated into the final production.

'Multimedia' are understood here in a broad sense, so that 2D as well as 3D productions, either or not interactive, are meant by it.

When producing multimedia, see for example WO 94/28480 (Gregory) or WO 97/46957 (Sampson), the above-mentioned steps have been carried out manually and intuitively until now in an electronically isolated manner in relation to one another. The information of these different steps is stored and treated in different manners. Once the scenario has been developed, all the information is translated again in information which is easy to understand for a production environment. Thus, time and information are lost.

The invention aims a method for simplifying the production of multimedia which does not have the above-mentioned disadvantages and which allows for such a production in a simpler and faster way.

This aim is reached according to the invention in that it contains a method for working out a scenario, and with which this scenario is specified in the form of scenario objects and the relations between them, and with which, from the thus specified scenario, data are automatically extracted to initialize the production and integration steps by making use of a first type of intelligent processes, also called 'agents', which automatically and autonomously check the scenario for certain design rules.

Preferably, it also contains a method for producing multimedia components on the basis of the elaborated scenario, with which by means of a second type of intelligent processes, all the available information is filtered, and what is required for the further progress of the production step is selected.

With the information obtained by the second type of processes, the different scenario objects can be extended with characteristics or attributes which determine how a scenario object will manifest itself in the final production and how this scenario object will be realized.

It may contain a method for producing multimedia components on the basis of the elaborated scenario with which, if not all necessary data can be derived from the scenario, this information must be completed in an interactive manner by means of one or several 'guides', also called 'assistants' or 'wizards'.

The above-mentioned guides may among others consist of one or several of the following: an avatar guide, an object manipulation guide, an interactive assembly guide, a guide for visualizing changing object statuses, a guide for simulating physical forces, an annotation guide and a guide for visualizing environments.

According to a preferred embodiment, the obtained scenario objects can be stored together with their attributes in a multimedia database with distributed data access characteristics.

This database may possibly be linked to one or several existing document management systems.

The invention also concerns a device which is particularly suitable for applying the above-mentioned method.

Consequently, the invention also concerns a device for simplifying the production of multimedia containing scenario development means for specifying the different parts of the multimedia environment, preferably in a heterarchic form, and which is characterized in that the scenario development means contain means for specifying the scenario in the form of scenario objects and the relations between them, and means for automatically and autonomously checking the scenario for specific design rules.

The means to specify the scenario may contain means to link a description to each of the components of the media environment and means to indicate in every description to which aspect each fragment thereof is related.

Preferably, the device contains production means for producing the necessary multimedia components, which production means contain means to filter all available information and to select what is required for the further progress of the production, and which contain a number of guides.

The production means may contain at least one or several guides from the above-mentioned group of guides.

The production means may contain means for the import of both existing and newly designed media components.

They may also contain management means for managing them towards the users and towards the designers.

Preferably, the device contains integration means to place the media components produced by the production means in the media environment, which integration means may contain means for exporting the media components which have been integrated into a product towards the outside.

The device may contain a database with distributed data access, which may possibly be linked to one or several document management systems so as to be able to quickly trace a specific document.

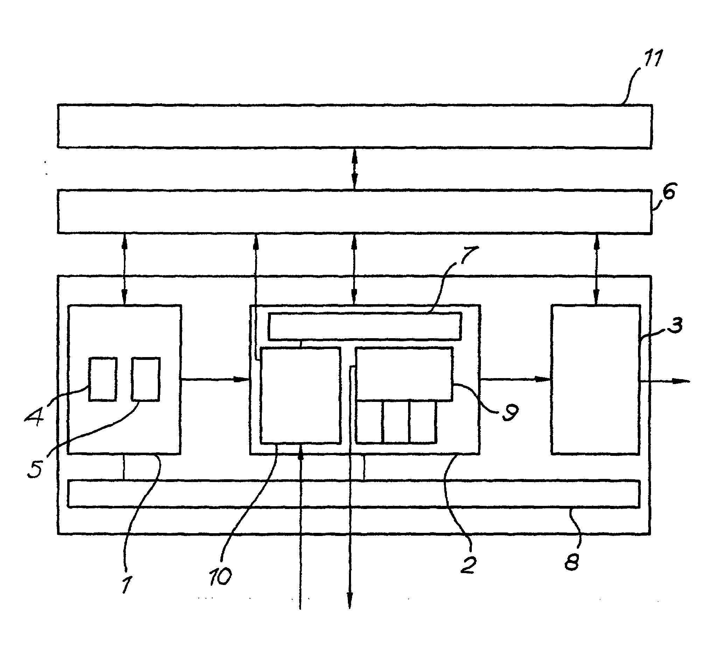

In order to better explain the characteristics of the invention, the following preferred embodiment of a method and device for simplifying the production of multimedia are described as an example only without being limitative in any way, with reference to the accompanying drawing which represents a block diagram of a device according to the invention.

The drawing represents a device for the production of multimedia which mainly consists of three modules which form scenario development means 1 for specifying the different parts of the multimedia environment, production means 2 for producing the necessary multimedia components and integration means 3 respectively for placing the media components produced by the production means 2 in the media environment.

The scenario development means 1 contain means 4 to specify the scenario in the form of scenario objects and the relations between them, and means 5 to automatically and autonomously check the scenario for specific design rules.

Every scenario object describes a specific part of the multimedia production into greater or lesser detail. A scenario object and its relations with other scenario objects may be specified by means of a text, a drawing or any other medium whatsoever.

The means 4 for specifying the scenario, also called 'story designer', contain means to link a description to each of the components of the media environment and means to indicate in every description to what aspect every fragment thereof is related.

These means 4 contain selection means, a simple text editor and a sketch window. They may contain a small interactive environment themselves in which the hierarchical structure of the components can be visualized as a 3D image.

The means 4 are connected to a multimedia database 6 with distributed data access.

The first method according to the invention used for producing multimedia makes it possible to specify the scenario with the scenario development means 1 in the form of scenario objects, as well as the relations between them, and to automatically extract data from the thus specified scenario to initiate the production and integration steps. To this end, this method makes use of a first type of intelligent processes, also called 'agents', which automatically and autonomously check the scenario for specific design rules.

The scenarist specifies the different components of the multimedia production one by one into greater or lesser detail, for example the virtual environment, and links an interactive object, a component or an avatar, to every component, for example a scene, as well as its relations with other scenario objects, a description which consists of a text, a drawing or another medium.

By means of the above-mentioned selection means, it is possible to indicate in the descriptive text and/or drawing onto which aspect every fragment of this text and drawing relates: the form, the produced sound, the autonomous or the interactive behavior. By indicating this, it is possible to semi-automatically recognize in a later stage, during the production step, which author can and may work on what component of the production, and it is possible to automatically generate a report for these authors in which all the relevant information of the scenario is summarized.

The scenarist may hereby work in a heterarchic manner.

He may start with a general description of the scenario and then specify the different components one by one in greater detail, but he may also start with specifying the smaller components first to then combine them into larger parts.

For example, in a 3D environment, the scenarist will first produce a scenario object in which he gives a short description of the virtual environment as a whole, after which he can describe certain components of the virtual environment in detail in subsequent scenario objects. These scenario objects may be ordinary environmental objects or avatar objects.

The relations which are established between the components and which are simultaneously described with these components can be visualized, just as these components, in the 3D image (3D graph) which forms the basis of the interface with the scenario development means 1 and the production means 2.

The thus described scenario objects, as well as the relations between them, for example component aggregate relations or interactive relations between the objects, are stored in the database 6 from where the scenarist can also extract stored information.

The means 5 to automatically and autonomously check the scenario for specific design rules contain intelligent processes or what are called 'agents' with which the above-mentioned checking is done automatically and autonomously.

Said design rules may be related to several aspects of the scenario, such as the accessibility and the perceptibility of different components of the scenario, the length of the navigation trajectories, etc.

Thanks to a second working method, the components of the media production are produced by means of the production means 2.

The production means 2 are also connected to the database 6 and contain means for carrying out a second series of intelligent processes to filter all available information and to select what is required for the further course of the production.

With the information obtained via this second type of processes, the different scenario objects are extended with attributes which determine how a scenario object will manifest itself in the final production and how this scenario object will be realized.

The production means 2 contain management means 7 which are meant among others for the producer or the manager of the project. With these management means 7, the producer can manage who is qualified to input electronic data, and also user preferences 8 ('multi-user facilities') are managed.

Thus, these management means 7 contain among others means to recognize which author can and may work on what component or fragment, and means to generate a report for an author with the information from the scenario which is relevant for this author.

Also the production can be followed up as far as quality, planning and budget are concerned. The present status of the production can be evaluated at any time. Also possible changes to the scenario, which have to be approved by the producer before they are used for the production, can be evaluated with this component as far as their influence on the costs, the planning and the quality of the production is concerned.

In order to extend the scenario objects with attributes, it will usually not be possible to retrieve all the data from the scenario.

To this end, the production means 2 further contain a number of 'wizards' or guides 9 which are meant in particular for the authors, i.e. the fellow workers who develop the different components of the scenario, and by means of which the user can complete the information in an interactive manner.

Every guide contains behavior functions for subjects, scenes, avatars and such which occur frequently or which are frequently required, and it offers functions to translate the behavior descriptions of the scenario towards the program.

One or several of the following guides are available:
- An avatar guide which supports the user when specifying the manner in which the end user will be able to navigate through the scenario. In the case of a production with the medium 'Virtual reality' with among others interactive 3D graphic parts, the user will be able to specify by means of this guide how the end-user can navigate through the virtual environment.

This avatar guide is the basic guide which is always present. The others can be added in the form of a plug-in component.
- An object manipulation guide which supports the user when specifying the manner in which the end-user will be able to manipulate the objects, for example operate a visualized machine.
- An interactive assembly guide which supports the user when specifying the manner in which the end-user will be able to assemble objects into larger wholes.
- A guide for the visualization of changing object statuses which supports the user when specifying the manner in which alternative statuses of an object should be visualized, as well as the data source from which the status of these objects can be obtained.
- A guide for simulating physical forces which supports the user when specifying the behavior of the objects under the influence of physical forces such as gravitation, electromagnetic forces, forces resulting from wind load, forces resulting from the impact which bodies have on one another (in case of collision), etc.
- An annotation guide which supports the user when specifying the manner in which the end-user will be able to add annotations to objects as well as the manner in which annotations should be visualized.

In the case of a production with the medium 'virtual and extended reality', this annotation guide will support the user when specifying the 3D annotation methods to be realized.
- A guide for visualizing environments which supports the user when specifying the environments in which the objects will be visualized.

When using these guides, the operator, i.e. the user of a device which supports the working method, can possibly add attributes himself.

When all behaviors can be filled in with the offered functions of the available guides, no further programming will be needed for the application. Usually, however, this is not the case. In this case, a project fellow worker can write out the media environment in one or several files with which the author or the programmer can carry on. These files contain a script code for all the behavior functions which have been selected in the guide.

Media components that are still being worked on and which thus are not stored in the database 6, are filled in among others with simple, temporary components. In the scripts have been defined zones where the programmer can add extra program codes. These zones are defined by means of comment fields.

The files which have been extended by a programmer can then be read in in the data base later on. The added program codes are stored in the data base, as well as the changes to the codes which were already there.

Possibly, one can make a short report for each of the media components to be created (geometry, pixmap, video, sound) with the program of the demands for these components. This report is composed of all the descriptions of these components which are available in the scenario.

Another part of the production means 2 consists of means 10 for importing both existing and newly designed media components, which have for example been designed by means of the above-mentioned guides 9. With these import means, created media components such as geometry, pixmaps, video and sound can be imported in the project database. Every component to be imported is allocated by the author to an object, a scene, an avatar or parts thereof. The format transformation for each of these media components is carried out among others by means of external programs which are invocated from the import means 10.

According to a third method, the produced components are integrated into the final production by means of the integration means 3, or, in other words, the multimedia components which have been produced by the production means 2 are placed in the media environment.

These integration means 3 to this end contain means for exporting media components which have been integrated into a product, with their definite interpretation, towards the outside, for example a multimedia player, a viewer, etc.

By means of these integration means 3, the components can be exported first to an editor and, after they have been possibly adjusted, read in in the database 6 and be exported towards the outside. During the integration, it is in principle only possible to adjust parameters such as the position of objects, time intervals, etc., whereas during the production, scripts and objects which are strictly program-related are adjusted or added.

As already mentioned, the scenario objects, together with their relations and attributes, and the multimedia components are stored in the multimedia database 6. The imported media components are each time linked to the scenario object or the part thereof they are a realization of.

As the scenarist must be able to build up the scenario in an entirely free manner, the multimedia database 6 must be very flexible, which is realized by offering small scenario objects which can be linked to one another by the scenarist into a fully-fledged scenario. Other actors in the production process may then link various data to them which are related to the implementation of the scenario objects. These data, which are inputted during the import of the media components, are read in from separate files for which it must be possible, in due time, to be exported again from the database 6 as loose files.

This multimedia database 6 can be linked to one or several existing document management systems 11.

The above-described method and device allow for a very flexible and quick production of multimedia.

The device must not necessarily contain the three above-described modules. The modules can be marketed as separate. It is sufficient if the device contains the module with the scenario development means 1. The production of the components and/or the integration can possibly be carried out in a conventional manner.

The invention is by no means limited to the above-described embodiment represented in the accompanying drawing; on the contrary, such a method and device for producing multimedia can be made in all sorts of variants.

## Claims

1. Method for simplifying the production of multimedia, during the production of which, in a first stage, a scenario is developed whereby the content of the multimedia production is determined in a descriptive manner, whereby, in a second stage, the components of the multimedia are produced, after which, in a third stage, the produced components are integrated into the final production, **characterized in that** it contains a method for working out a scenario and with which this scenario is specified in the form of scenario objects and the relations between them and with which, from the thus specified scenario, data are automatically extracted to initialize the production and integration steps by making use of a first type of intelligent processes, also called 'agents', which automatically and autonomously check the scenario for certain design rules.

2. Method according to claim 1, **characterized in that** the scenario is specified in a heterarchic manner.

3. Method according to claim 1 or 2, **characterized in that** it contains a method for producing multimedia components on the basis of the elaborated scenario, with which by means of a second type of intelligent processes, all the available information is filtered, and what is required for the further progress of the production step is selected.

4. Method according to claim 3, **characterized in that**, with the information obtained by the second type of processes, the different scenario objects can be extended with attributes which determine how a scenario object will manifest itself in the final production and how this scenario object will be realized.

5. Method according to claim 1 to 4, **characterized in that** it contains a method for producing multimedia components on the basis of the elaborated scenario with which, if not all necessary data can be derived from the scenario, this information must be completed in an interactive manner by means of one or several 'guides', also called 'wizards'.

6. Method according to claim 5, **characterized in that** these guides contain one or several of the following: an avatar guide, which supports the user when specifying the manner in which the end-user will be able to navigate through the scenario, an object manipulation guide which supports the user when specifying the manner in which the end-user will be able to manipulate the objects, an interactive assembly guide which supports the user when specifying the manner in which the end-user will be able to assemble objects into larger wholes, a guide for visualizing changing object statuses which supports the user when specifying the manner in which alternative statuses of an object should be visualized, as well as the data source from which the status of these objects can be obtained, a guide for simulating physical forces which supports the user when specifying the behavior of the objects under the influence of physical forces, an annotation guide which supports the user when specifying the manner in which the end-user will be able to add annotations to objects as well as the manner in which annotations should be visualized, and a guide for visualizing environments which supports the user when specifying the environments in which the objects will be visualized.

7. Method according to any of claims 3 to 6, **characterized in that**, during the production of the multimedia components, multimedia components from outside, possibly made by means of one or several guides, can be imported.

8. Method according to any of the preceding claims, **characterized in that** the obtained scenario objects, together with their attributes, are stored in a multimedia database with distributed data access characteristics.

9. Method according to claim 8, **characterized in that** the database is linked to one or several existing document management systems.

10. Device for simplifying the production of multimedia, which device contains scenario development means (1) for specifying the different parts of the multimedia environment, **characterized in that** the scenario development means (1) contain means (4) for specifying the scenario in the form of scenario objects and the relations between them, and means (5) for automatically and autonomously checking the scenario for specific design rules.

11. Device according to claim 10, **characterized in that** the means (4) to specify the scenario may contain means to link a description to each of the components of the media environment and means to indicate in every description to which aspect each fragment thereof is related.

12. Device according to claim 10 or 11, **characterized in that** it contains production means (2) for producing the necessary multimedia components, which production means (2) contain means to filter all available information and to select what is required for the further progress of the production, and which contain one or several guides (9).

13. Device according to claim 12, **characterized in that** the production means (2) contain at least one or several guides of the group composed of: an avatar guide which supports the user when specifying the manner in which the end-user will be able to navigate through the scenario, an object manipulation guide which supports the user when specifying the manner in which the end-user will be able to manipulate the objects, an interactive assembly guide which supports the user when specifying the manner in which the end-user will be able to assemble objects into larger wholes, a guide for visualizing changing object statuses which supports the user when specifying the manner in which alternative statuses of an object should be visualized, as well as the data source from which the status of these objects can be obtained, a guide for simulating physical forces which supports the user when specifying the behavior of the objects under the influence of physical forces, an annotation guide which supports the user when specifying the manner in which the end-user will be able to add annotations to objects as well as the manner in which annotations should be visualized, and a guide for visualizing environments which supports the user when specifying the environments in which the objects will be visualized.

14. Device according to claim 12 or 13, **characterized in that** the production means (2) contain means (10) for the import of both existing and newly designed media components.

15. Device according to any of claims 12 to 14, **characterized in that** the production means (2) contain management means (7) to manage them towards the users and the designers.

16. Device according to claim 15, **characterized in that** the management means (7) contain means to recognize which author can and may work on what component or fragment of the production, and to generate a report for an author containing all the relevant information from the scenario for this author.

17. Device according to any of claims 10 to 16, **characterized in that** it contains integration means (3) to place the media components produced by the production means in the media environment.

18. Device according to claim 17, **characterized in that** the integration means (3) contain means for exporting the media components which have been integrated into a product towards the outside.

19. Device according to any of claims 10 to 18, **characterized in that** it contains a database (6) with distributed data access which is possibly linked to one or several existing document management systems (11).

## Patentansprüche

1. Verfahren zur Vereinfachung der Verwirklichung von Multimedia, während deren Verwirklichung, in einem ersten Schritt, ein Szenario entwickelt wird, wobei auf beschreibende Weise der Inhalt der Multimediaproduktion festgelegt wird, wobei in einem zweiten Schritt die Bestandteile der Multimedia produziert werden, wonach, in einem dritten Schritt, die produzierten Bestandteile in die Endproduktion integriert werden, **dadurch gekennzeichnet, dass** es ein Verfahren zum Ausarbeiten eines Szenarios umfasst und womit dieses Szenario in Form von Szenario-Objekten und den Beziehungen zwischen diesen spezifiziert wird und womit, aus diesem somit spezifizierten Szenario, automatisch Daten extrahiert werden, um die Produktions- und Integrationsschritte zu starten, indem eine erste Art intelligenter Prozesse, auch 'Agents' genannt, verwendet wird, die automatisch und autonom das Szenario auf bestimmte Entwurfsregeln überprüfen.

2. Verfahren gemäß Anspruch 1, **dadurch gekennzeichnet, dass** das Szenario auf heterarchische Weise spezifiziert ist.

3. Verfahren gemäß Anspruch 1 oder 2, **dadurch gekennzeichnet, dass** es ein Verfahren umfasst zum Produzieren von Multimediabestandteilen, ausgehend von dem ausgearbeiteten Szenario, womit mittels einer zweiten Art intelligenter Prozesse alle vorhandene Information gefiltert und das zum weiteren Verlauf des Produktionsschritts Nötige selektiert wird.

4. Verfahren gemäß Anspruch 3, **dadurch gekennzeichnet, dass** mit der durch die zweite Art von Prozessen erhaltenen Information die verschiedenen Szenario-Objekte um Attribute erweitert werden, die bestimmen, wie ein Szenario-Objekt sich in der Endproduktion manifestiert und wie dieses Szenario-Objekt verwirklicht wird.

5. Verfahren gemäß einem der Ansprüche 1 bis 4, **dadurch gekennzeichnet, dass** es ein Verfahren umfasst zum Produzieren von Multimediabestandteilen, ausgehend von dem ausgearbeiteten Szenario, womit, wenn nicht alle erforderlichen Daten aus dem Szenario abgeleitet werden können, diese Information auf interaktive Weise mit Hilfe von einem oder mehr 'Führern', auch 'Wizards' genannt, vervollständigt wird.

6. Verfahren gemäß Anspruch 5, **dadurch gekennzeichnet, dass** diese Führer eines oder mehr der folgenden umfassen: einen Avatar-Führer, der den Benutzer bei der Spezifikation der Art und Weise, in der der Endbenutzer durch das Szenario navigieren wird, unterstützt, einen Objekt-Manipulationsführer, der den Benutzer beim Spezifizieren der Art und Weise, in der der Endbenutzer in der Lage sein wird, Objekte zu manipulieren, unterstützt, einen interaktiven Montageführer, der den Benutzer beim Spezifizieren der Art und Weise, in der der Endbenutzer in der Lage sein wird, Objekte zu größeren Einheiten zusammenzusetzen, unterstützt, einen Führer für die Visualisierung verändernder Objektzustände, die den Benutzer beim Spezifizieren der Art und Weise, worin alternative Zustände eines Objekts visualisiert werden müssen, wie auch der Datenquelle, von der der Status dieser Objekte erhalten werden kann, unterstützt, einen Führer zum Simulieren physikalischer Kräfte, der den Benutzer beim Spezifizieren des Verhaltens der Objekte unter dem Einfluss physikalischer Kräfte unterstützt, einen Beschriftungsführer, der den Benutzer beim Spezifizieren der Art und Weise, in der der Endbenutzer Beschriftungen zu Objekten zuordnen kann, wie auch die Art und Weise, worin Beschriftungen visualisiert werden müssen, unterstützt, und einen Führer für die Visualisierung von Umgebungen, der den Benutzer beim Spezifizieren der Umgebungen, worin die Objekte visualisiert werden, unterstützt.

7. Verfahren gemäß einem der Ansprüche 3 bis 6, **dadurch gekennzeichnet, dass**, während der Produktion der Multimediabestandteile, Multimediabestandteile von außen, eventuell erstellt mittels eines oder mehrerer Führer, importiert werden können.

8. Verfahren gemäß einem der vorgenannten Ansprüche, **dadurch gekennzeichnet, dass** die erhaltenen Szenario-Objekte, zusammen mit ihren Attributen, in einer Multimedia-Datenbank mit verteiltem Datenzugang oder sogenannten 'distributed data access'-Eigenschaften gespeichert werden.

9. Verfahren gemäß Anspruch 8, **dadurch gekennzeichnet, dass** die Datenbank mit einem oder mehreren bestehenden Dokument-Verwaltungssystemen gekoppelt ist.

10. Vorrichtung zur Vereinfachung der Verwirklichung von Multimedia, welche Vorrichtung Szenario-Entwurfsmittel (1) zum Spezifizieren der verschiedenen Teile der Multimedia-Umgebung umfasst, **dadurch gekennzeichnet, dass** die Szenario-Entwurfsmittel (1) Mittel (4) zum Spezifizieren des Szenarios in Form von Szenario-Objekten und den Beziehungen zwischen diesen umfassen, und Mittel (5) zum automatischen und autonomen Überprüfen des Szenarios auf spezifische Entwurfsregeln.

11. Vorrichtung gemäß Anspruch 10, **dadurch gekennzeichnet, dass** die Mittel (4) zum Spezifizieren des Szenarios Mittel umfassen können, um eine Beschreibung an jeden der Bestandteile der Medienumgebung zu koppeln, und Mittel, um in jeder Beschreibung anzudeuten, auf welchen Aspekt jedes Fragment hiervon sich bezieht.

12. Vorrichtung gemäß Anspruch 10 oder 11, **dadurch gekennzeichnet, dass** sie Produktionsmittel (2) zum Produzieren der erforderlichen Multimediabestandteile umfasst, welche Produktionsmittel (2) Mittel zum Filtern aller verfügbaren Information und zum Selektieren dessen, was für den weiteren Verlauf der Produktion notwendig ist, und ein oder mehr Führer (9) umfassen.

13. Vorrichtung gemäß Anspruch 12, **dadurch gekennzeichnet, dass** die Produktionsmittel (2) zumindest einen oder mehr Führer umfasst aus der Gruppe, zusammengesetzt aus: einem Avatar-Führer, der den Benutzer bei der Spezifikation der Art und Weise, in der der Endbenutzer durch das Szenario navigieren wird, unterstützt, einem Objekt-Manipulationsführer, der den Benutzer beim Spezifizieren der Art und Weise, in der der Endbenutzer in der Lage sein wird, Objekte zu manipulieren, unterstützt, einem interaktiven Montageführer, der den Benutzer beim Spezifizieren der Art und Weise, in der der Endbenutzer in der Lage sein wird, Objekte zu größeren Einheiten zusammenzusetzen, unterstützt, einem Führer für die Visualisierung verändernder Objektzustände, die den Benutzer beim Spezifizieren der Art und Weise, in der alternative Zustände eines Objekts visualisiert werden müssen, wie auch der Datenquelle, von der der Status dieser Objekte erhalten werden kann, unterstützt, einem Führer zum Simulieren physikalischer Kräfte, der den Benutzer beim Spezifizieren des Verhaltens der Objekte unter dem Einfluss physikalischer Kräfte unterstützt, einem Beschriftungsführer, der den Benutzer beim Spezifizieren der Art und Weise, in der der Endbenutzer Beschriftungen zu Objekten zuordnen kann, wie auch die Art und Weise, in der Beschriftungen visualisiert werden müssen, unterstützt, und einem Führer für die Visualisierung von Umgebungen, der den Benutzer beim Spezifizieren der Umgebungen, worin die Objekte visualisiert werden, unterstützt.

14. Vorrichtung gemäß Anspruch 12 oder 13, **dadurch gekennzeichnet, dass** die Produktionsmittel (2) Mittel (10) zum Import sowohl bestehender als auch neu entworfener Medienbestandteile umfassen.

15. Vorrichtung gemäß Anspruch 12 bis 14, **dadurch gekennzeichnet, dass** die Produktionsmittel (2) Verwaltungsmittel (7) umfassen, um sie in Hinblick auf die Benutzer und die Entwerfer zu verwalten.

16. Vorrichtung gemäß Anspruch 15, **dadurch gekennzeichnet, dass** die Verwaltungsmittel (7) Mittel umfassen, um zu erkennen, welcher Autor an welchem Bestandteil oder Fragment der Produktion arbeiten kann und darf, und zum Generieren eines Berichts für einen Autor, der alle relevante Information aus dem Szenario für diesen Autor umfasst.

17. Vorrichtung gemäß einem der Ansprüche 10 bis 16, **dadurch gekennzeichnet, dass** sie Integrationsmittel (3) umfasst, um die von den Produktionsmitteln produzierten Medienbestandteile in der Medienumgebung zu plazieren.

18. Vorrichtung gemäß Anspruch 17, **dadurch gekennzeichnet, dass** die Integrationsmittel (3) Mittel zum Exportieren der in ein Produkt integrierten Medienbestandteile nach außen umfassen.

19. Vorrichtung gemäß einem der Ansprüche 10 bis 18, **dadurch gekennzeichnet, dass** sie eine Datenbank (6) mit verteiltem Datenzugang umfasst, die eventuell an ein oder mehrere bestehende Dokument-Verwaltungssysteme (11) gekoppelt ist.

## Revendications

1. Procédé pour simplifier la production de multimédia au cours de la production desquels, dans une première étape, un scénario est élaboré par lequel le contenu de la production du multimédia est déterminé d'une manière descriptive, par lequel, dans une deuxième étape, les composants du multimédia sont produits, après quoi, dans une troisième étape, les composants produits sont intégrés dans la production finale, **caractérisé en ce qu'**il contient un procédé pour élaborer un scénario et avec lequel ce scénario est spécifié sous la forme d'objets de scénario et de relations entre ces derniers, et avec lequel, à partir du scénario ainsi spécifié, des données sont extraites de manière automatique pour déclencher les étapes de production et d'intégration en faisant usage d'un premier type de processus intelligents également désignés par le terme "agents" qui vérifient le scénario en fonction de certaines règles de conception, de manière automatique et autonome.

2. Procédé selon la revendication 1, **caractérisé en ce que** le scénario est spécifié d'une manière hétérachique.

3. Procédé selon la revendication 1 ou 2, **caractérisé en ce qu'**il contient un procédé pour produire des composants de multimédia sur base du scénario élaboré, avec lequel, à l'aide d'un deuxième type de processus intelligents, toutes les informations disponibles sont filtrées, et ce qui est requis pour la progression ultérieure de l'étape de production est sélectionné.

4. Procédé selon la revendication 3, **caractérisé en ce que**, avec les informations obtenues par le deuxième type de processus, les différents scénarios d'objets peuvent être étendus avec des attributs qui déterminent la façon dont un objet de scénario se présentera dans la production finale et la façon dont cet objet de scénario sera réalisé.

5. Procédé selon les revendications 1 à 4, **caractérisé en ce qu'**il contient un procédé pour produire des composants de multimédia sur la base du scénario élaboré, avec lequel, si toutes les données nécessaires ne peuvent être dérivées du scénario, ces informations doivent être complétées d'une manière interactive à l'aide d'un ou de plusieurs "guides" que l'on désigne également par l'expression "programmeurs très habiles".

6. Procédé selon la revendication 5, **caractérisé en ce que** ces guides contiennent un ou plusieurs guides parmi ceux mentionnés ci-après : un guide d'avatars qui aide l'utilisateur lorsqu'il spécifie la manière par laquelle l'utilisateur final sera à même de naviguer à travers le scénario, un guide de manipulation d'objets qui aide l'utilisateur lorsqu'il spécifie la manière par laquelle l'utilisateur final sera à même de manipuler les objets, un guide d'assemblage interactif qui aide l'utilisateur lorsqu'il spécifie la manière par laquelle l'utilisateur final sera à même d'assembler des objets en ensembles plus grands, un guide pour visualiser des changements de statuts d'objets qui aide l'utilisateur lorsqu'il spécifie la manière par laquelle des statuts variables d'un objet doivent être visualisés, ainsi que les sources de données à partir desquels on peut obtenir le statut de ces objets, un guide pour simuler des forces physiques qui aide l'utilisateur lorsqu'il spécifie le comportement des objets sous l'influence de forces physiques, un guide d'annotations qui aide l'utilisateur lorsqu'il spécifie la manière par laquelle l'utilisateur final sera à même d'ajouter des annotations à des objets, ainsi que la manière par laquelle les annotations doivent être visualisées, et un guide pour visualiser des environnements, qui aide l'utilisateur lorsqu'il spécifie les environnements dans lesquels les objets seront visualisés.

7. Procédé selon l'une quelconque des revendications 3 à 6, **caractérisé en ce que**, au cours de la production des composants de multimédia, on peut importer des composants de multimédia de l'extérieur, le cas échéant obtenus à l'aide d'un ou de plusieurs guides.

8. Procédé selon l'une quelconque des revendications précédentes, **caractérisé en ce que** les scénarios d'objets obtenus, de manière conjointe avec leurs attributs, sont stockés dans une base de données de multimédia comprenant des caractéristiques d'accès de données du type en réseau.

9. Procédé selon la revendication 8, **caractérisé en ce que** la base de donnée est reliée à un ou plusieurs systèmes de gestion de documents existants.

10. Dispositif pour simplifier la production de multimédia, ledit dispositif contenant un moyen (1) permettant d'élaborer un scénario pour spécifier les différentes parties de l'environnement du multimédia, **caractérisé en ce que** le moyen (1) permettant d'élaborer un scénario contient des moyens (4) pour spécifier le scénario sous la forme d'objets de scénario et des relations entre ces derniers, et des moyens (5) pour vérifier le scénario en fonction de règles de conception spécifiques, de manière automatique et autonome.

11. Dispositif selon la revendication 10, **caractérisé en ce que** les moyens (4) pour spécifier le scénario peuvent contenir des moyens pour relier une description à chacun des composants de l'environnement du média et des moyens pour indiquer dans chaque description à quel aspect est apparenté chacun de ses fragments.

12. Dispositif selon la revendication 10 ou 11, **caractérisé en ce qu'**il contient des moyens de production (2) pour produire les composants nécessaires de multimédia, lesdits moyens de production (2) contenant des moyens pour filtrer toutes les informations disponibles et pour sélectionner ce qui est requis pour la progression ultérieure de la production, et qui contient un ou plusieurs guides (9).

13. Dispositif selon la revendication 12, **caractérisé en ce que** les moyens de production (2) contiennent au moins un ou plusieurs guides choisis parmi le groupe composé par : un guide d'avatars qui aide l'utilisateur lorsqu'il spécifie la manière par laquelle l'utilisateur final sera à même de naviguer à travers le scénario, un guide de manipulation d'objets qui aide l'utilisateur lorsqu'il spécifie la manière par laquelle l'utilisateur final sera à même de manipuler les objets, un guide d'assemblage interactif qui aide l'utilisateur lorsqu'il spécifie la manière par laquelle l'utilisateur final sera à même d'assembler des objets en ensembles plus grands, un guide pour visualiser des changements de statuts d'objets qui aide l'utilisateur lorsqu'il spécifie la manière par laquelle des statuts variables d'un objet doivent être visualisés, ainsi que les sources de données à partir desquels on peut obtenir le statut de ces objets, un guide pour simuler des forces physiques qui aide l'utilisateur lorsqu'il spécifie le comportement des objets sous l'influence de forces physiques, un guide d'annotations qui aide l'utilisateur lorsqu'il spécifie la manière par laquelle l'utilisateur final sera à même d'ajouter des annotations à des objets, ainsi que la manière par laquelle les annotations doivent être visualisées, et un guide pour visualiser des environnements, qui aide l'utilisateur lorsqu'il spécifie les environnements dans lesquels les objets seront visualisés.

14. Dispositif selon la revendication 12 ou 13, **caractérisé en ce que** les moyens de production (2) contiennent des moyens (10) pour l'importation de composants de média à la fois existants et nouvellement conçus.

15. Dispositif selon l'une quelconque des revendications 12 à 14, **caractérisé en ce que** les moyens de production (2) contiennent des moyens de gestion (7) pour les gérer en direction des utilisateurs et en direction des concepteurs.

16. Dispositif selon la revendication 15, **caractérisé en ce que** les moyens de gestion (7) contiennent des moyens pour reconnaître l'auteur qui sera capable et susceptible de travailler sur ce composant ou ce fragment de la production et pour générer un rapport pour un auteur contenant toutes les informations pertinentes à partir du scénario pour cet auteur.

17. Dispositif selon l'une quelconque des revendications 10 à 16, **caractérisé en ce qu'**il contient des moyens d'intégration (3) pour placer les composants de média produits par les moyens de production dans l'environnement du média.

18. Dispositif selon la revendication 17, **caractérisé en ce que** les moyens d'intégration (3) contiennent des moyens pour exporter les composants du média qui ont été intégrés dans un produit destiné à l'extérieur.

19. Dispositif selon l'une quelconque des revendications 10 à 18, **caractérisé en ce qu'**il contient une base de données (6) avec un accès de données du type en réseau, qui est relié le cas échéant à un ou plusieurs systèmes de gestion de documents existants (11).
